(19) Europäisches Patentamt / European Patent Office / Office européen des brevets

(11) **EP 2 586 851 B1**

(12) **FASCICULE DE BREVET EUROPEEN**

(45) Date de publication et mention
de la délivrance du brevet:
**24.08.2022 Bulletin 2022/34**

(21) Numéro de dépôt: **12290343.8**

(22) Date de dépôt: **12.10.2012**

(51) Classification Internationale des Brevets (IPC):
*C10G 65/04* $^{(2006.01)}$    *C10G 65/12* $^{(2006.01)}$
*B01J 21/06* $^{(2006.01)}$    *B01J 23/00* $^{(2006.01)}$

(52) Classification Coopérative des Brevets (CPC):
**C10G 65/12; B01J 21/12; B01J 23/42;**
**B01J 35/0066; B01J 35/1019; B01J 35/1042;**
**B01J 35/1061; B01J 35/108; B01J 37/0009;**
**C10G 65/043;** B01J 23/44; C10G 2300/1022;
C10G 2300/1081; C10G 2300/202;
C10G 2300/4006;        (Cont.)

(54) **Procédé de production de distillats moyens dans lequel la charge issue du procédé Fischer-Tropsch et le flux d'hydrogéne contiennent une teneur limitée en oxygène**

Herstellungsverfahren von Mitteldestillaten, bei dem die aus dem Fischer-Tropsch-Verfahren hervorgegangene Charge und der Wasserstofffluss eine begrenzte Menge von Sauerstoff enthalten

Method for producing middle distillates in which the feedstock from the Fischer-Tropsch process and the hydrogen stream have limited oxygen levels

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.10.2011 FR 1103278**

(43) Date de publication de la demande:
**01.05.2013 Bulletin 2013/18**

(73) Titulaires:
- **IFP Energies nouvelles**
 **92500 Rueil-Malmaison (FR)**
- **ENI S.p.A.**
 **00144 Roma (IT)**

(72) Inventeurs:
- **Bouchy, Christophe**
 **69007 Lyon (FR)**
- **Grezaud, Aline**
 **69008 Lyon (FR)**
- **Heraud, Jean-Philippe**
 **69780 Saint-Pierre-de-Chandieu (FR)**
- **France-Dulot, Hugues**
 **69007 Lyon (FR)**
- **Calemma, Vincenzo**
 **20097 San Donato Milanese (Milano) (IT)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**EP-A1- 0 583 836**

(52) Classification Coopérative des Brevets (CPC):
(Cont.)
C10G 2300/4012; C10G 2300/4018; C10G 2300/42;
C10G 2400/04; C10G 2400/06; C10G 2400/08

**Description**

La présente invention concerne un procédé de production de distillats moyens à partir d'une charge paraffinique produite par synthèse Fischer-Tropsch comprenant une teneur limitée en molécules contenant au moins un atome d'oxygène dans lequel ladite charge subit au moins une étape d'hydrocraquage/hydroisomérisation en présence d'un flux d'hydrogène contenant également une teneur limitée en molécules contenant au moins un atome d'oxygène.

<u>Art antérieur</u>

Dans le procédé Fischer-Tropsch basse température, le gaz de synthèse ($CO+H_2$) est transformé catalytiquement en eau et en un effluent hydrocarboné comprenant des insaturés, des produits oxygénés et des hydrocarbures paraffiniques essentiellement linéaires sous forme gazeuse, liquide ou solide. Ledit effluent ainsi produit, constituant la charge paraffinique utilisée selon l'invention, est généralement exempt d'impuretés hétéroatomiques telles que, par exemple, le soufre, l'azote ou des métaux. Ladite charge paraffinique ne contient également pratiquement peu ou pas d'aromatiques, de naphtènes et plus généralement de cycles. Par contre, ladite charge paraffinique peut présenter une teneur non négligeable en produits oxygénés qui est généralement inférieure à 10% poids environ et également une teneur en insaturés (produits oléfiniques en général) généralement inférieure à 20% en poids. Cependant, ladite charge, principalement constituée de normales paraffines, ne peut être utilisée telle quelle, notamment à cause de ses propriétés de tenue à froid peu compatibles avec les utilisations habituelles des coupes pétrolières. Par exemple, le point de fusion d'un hydrocarbure linéaire contenant 20 atomes de carbone par molécule (température d'ébullition égale à 340°C environ c'est à dire souvent comprise dans la coupe distillats moyens) est de +37°C environ ce qui rend son utilisation impossible, la spécification reliée à cette tenue à froid, la température limite de filtrabilité étant de -15°C pour le gazole. De plus la charge paraffinique peut contenir des quantités plus ou moins importantes de paraffines longues (typiquement à plus de 22 atomes de carbone) de point d'ébullition trop élevé pour être incorporées à la gamme des distillats moyens ou encore des paraffines courtes (typiquement à moins de 9 atomes de carbone) dont le point d'ébullition est trop bas pour être incorporées à la gamme des distillats moyens. Les hydrocarbures issus du procédé Fischer-Tropsch comprenant majoritairement des n-paraffines doivent ainsi être transformés en produits plus valorisables tels que par exemple le kérosène et gazole, qui sont obtenus, par exemple, après des réactions catalytiques d'hydroisomérisation et d'hydrocraquage.

Tous les catalyseurs utilisés actuellement en hydroisomérisation/hydrocraquage sont du type bifonctionnels associant une fonction acide à une fonction hydrogénante. La fonction acide est apportée par des supports de grandes surfaces (150 à 800 $m^2.g^{-1}$ généralement) présentant une acidité de Bronsted, telles que les alumines halogénées (chlorées ou fluorées notamment), les alumines phosphorées, les combinaisons d'oxydes de bore et d'aluminium, les silice-alumines ou encore les zéolithes. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI tels que chrome, molybdène et tungstène et au moins un métal du groupe VIII.

L'équilibre entre les deux fonctions acide et hydrogénante est l'un des paramètres qui régissent l'activité et la sélectivité du catalyseur. Une fonction acide faible et une fonction hydrogénante forte donnent des catalyseurs peu actifs et sélectifs envers l'isomérisation alors qu'une fonction acide forte et une fonction hydrogénante faible donnent des catalyseurs très actifs et sélectifs envers le craquage. Une troisième possibilité est d'utiliser une fonction acide forte et une fonction hydrogénante forte afin d'obtenir un catalyseur très actif mais également très sélectif envers l'isomérisation. Il est donc possible, en choisissant judicieusement chacune des fonctions d'ajuster le couple activité/sélectivité du catalyseur.

Dans le domaine de l'hydrocraquage et de l'hydroisomérisation de charges paraffiniques issues de la synthèse de Fischer-Tropsch, il est connu que la présence de composés oxygénés dans les charges paraffiniques issues de la synthèse de Fischer-Tropsch peut affecter l'équilibre entre les fonctions acide et hydrogénante du catalyseur d'hydrocraquage/hydroisomérisation placé en aval et donc affecter ses propriétés catalytiques. Les composés oxygénés présents dans lesdites charges paraffiniques sont généralement des oxydes de carbone tels que le monoxyde et le dioxyde de carbone (CO et $CO_2$), l'eau ou encore des alcools et/ou des acides carboxyliques, esters et cétones.

Par exemple D. Leckel (D. Leckel, Energy & Fuels 2005, 19, 1795-1803) compare les performances d'un catalyseur d'hydrocraquage d'une charge paraffinique issue de la synthèse de Fischer-Tropsch préalablement hydrotraitée, c'est-à-dire contenant une teneur réduite en composés oxygénés tels que les alcools et/ou les acides carboxyliques avec les performances d'un catalyseur d'hydrocraquage d'une charge paraffinique issue de la synthèse de Fischer-Tropsch n'ayant pas été préalablement hydrotraitée, c'est-à-dire contenant encore lesdits composés oxygénés. Il est reporté que l'élimination desdits composés oxygénés de la charge permet d'améliorer l'activité du catalyseur d'hydrocraquage d'une quinzaine de degrés Celsius mais détériore la sélectivité du catalyseur envers la production de distillats moyens.

Le brevet EP 0 583 836 B2 enseigne l'utilisation d'un procédé pour la préparation de gazole mettant en œuvre a) une étape d'hydrotraitement de la charge hydrocarbonée issue de la synthèse de Fischer-Tropsch pour saturer les oléfines de la charge et décomposer les produits oxygénés présents, suivie d'une étape (b) d'élimination de la fraction $C_4^-$ de la charge hydrotraitée et d'une étape c) d'hydrocraquage d'au moins une partie de l'effluent hydrocarboné issue de l'étape b). Il est enseigné que la mise en oeuvre des étapes (a) et (b) permet de prolonger la durée de vie du catalyseur d'hydroconversion de l'étape (c) ainsi que la sélectivité du catalyseur envers la production de gazole. Il est également enseigné que l'hydrogène requis pour la mise en oeuvre des étapes (a) et (c) peut être généré par tout procédé connu de l'homme de l'art sans qu'aucune indication sur la pureté de l'hydrogène employé ne soit fournie.

Le brevet US 6,709,569 B2 décrit un procédé spécifique pour la production d'effluent hydrocarboné de type distillats moyens à partir d'une charge issue d'un procédé de synthèse de Fischer-Tropsch, ladite charge étant fractionnée en une fraction légère et une fraction lourde, de sorte que ladite fraction légère subisse une étape d'élimination d'oxydes de carbone dissous dans ladite fraction légère (fraction $C_3$-$C_{20}$) par stripage, distillation ou fractionnement avant de subir une étape d'hydrotraitement et d'hydrocraquage en mélange avec ladite fraction lourde. Il est également mentionné que la source d'hydrogène utilisée peut être un gaz contenant de l'hydrogène qui ne contiendrait pas de quantités d'impuretés suffisamment importante pour affecter l'activité du catalyseur d'hydrotraitement. Il n'est donc pas fait mention de la nature des impuretés contenues dans l'hydrogène et de leur impact sur l'activité du catalyseur d'hydrocraquage dans le cas où elle dépasserait un certain seuil.

En effet, les procédés de production de distillats moyens à partir d'une charge paraffinique produite par synthèse Fischer-Tropsch peuvent utiliser de l'hydrogène provenant de différentes sources. Selon la nature des différentes sources, l'hydrogène utilisé dans le procédé selon l'invention peut contenir ou pas des impuretés. Par exemple une unité de reformage catalytique produit de l'hydrogène durant les réactions de déshydrogénation des naphtènes en aromatiques et durant les réactions de déshydrocyclisation. L'hydrogène produit par une unité de reformage catalytique est substantiellement exempt de CO et de $CO_2$. L'hydrogène peut également être produit par d'autres méthodes comme par exemple par le vaporeformage d'hydrocarbures légers ou encore par l'oxydation partielle de différents hydrocarbures comme des résidus lourds. Le vaporeformage consiste à transformer une charge légère d'hydrocarbure en gaz de synthèse, c'est-à-dire en un mélange d'hydrogène ($H_2$), de monoxyde de carbone (CO), de dioxyde de carbone ($CO_2$), et d'eau ($H_2O$) par réaction avec de la vapeur d'eau sur un catalyseur à base de Nickel. Dans ce cas la production d'hydrogène s'accompagne également de la formation de monoxyde de carbone qui est sensiblement éliminé par conversion à la vapeur selon le procédé de water gas shift selon le terme anglo-saxon en dioxyde de carbone ($CO_2$), puis par élimination du $CO_2$ par absorption par exemple par une solution d'amines. Il peut également y avoir élimination du monoxyde de carbone (CO) résiduel par une étape de méthanation. D'autres sources d'hydrogène peuvent également être employées comme l'hydrogène issu des gaz de craquage catalytique qui contient des quantités significatives de CO et de $CO_2$. Ainsi, selon son (ses) origine(s), l'hydrogène employé dans le procédé de production de distillats moyens à partir d'une charge paraffinique produite par synthèse Fischer-Tropsch peut contenir plusieurs centaines de ppm en volume d'oxydes de carbone.

En tentant de développer un procédé de production de distillats moyens à partir d'une charge paraffinique produite par synthèse Fischer-Tropsch, la demanderesse a découvert que la présence de monoxyde de carbone (CO), de dioxyde de carbone ($CO_2$), et plus généralement que la présence de molécules contenant au moins un atome d'oxygène dans l'hydrogène, même à de faibles teneurs en oxygène atomique, a un impact négatif sur les performances du catalyseur d'hydrocraquage et d'hydroisomérisation lorsque la charge paraffinique à hydroisomériser et hydrocraquer est substantiellement exempte de composés oxygénés, tels que le monoxyde et le dioxyde de carbone (CO et $CO_2$), l'eau ou encore des alcools et/ou des acides carboxyliques, esters et cétones, comme c'est le cas par exemple après une étape d'hydrotraitement. En effet, dans le cas d'une charge paraffinique issue du procédé Fischer-Tropsch qui contient une quantité significative de composés oxygénés, c'est à dire qui n'a pas été hydrotraitée, l'impact desdits composés oxygénés contenus dans ladite charge est largement supérieur à l'impact de la présence d'impuretés contenant au moins un atome d'oxygène dans l'hydrogène, qui devient alors négligeable. A contrario, lorsque la charge paraffinique est substantiellement exempte de composés oxygénés, la présence, dans l'hydrogène, d'impuretés contenant au moins un atome d'oxygène a un impact négatif sur le catalyseur d'hydroisomérisation/hydrocraquage.

Ainsi, la demanderesse a mis au point un procédé de production de distillats moyens mettant en œuvre une charge paraffinique produite par synthèse Fischer-Tropsch qui subit une étape d'hydrotraitement de manière à décomposer les composés oxygénés présents dans ladite charge, puis une étape d'élimination des impuretés contenant au moins un atome d'oxygène issues de la décomposition des composés oxygénés lors de l'étape d'hydrotraitement et en particulier du monoxyde de carbone (CO), du dioxyde de carbone ($CO_2$), et de l'eau ($H_2O$), avant d'être envoyé dans une étape d'hydrocraquage/hydroisomérisation qui opère en présence d'un flux d'hydrogène contenant une teneur limitée en molécules contenant au moins un atome d'oxygène.

Dans toute la suite du texte, on définit l'expression "molécules contenant au moins un atome d'oxygène" présentes dans l'hydrogène comme étant essentiellement le monoxyde de carbone CO, le dioxyde de carbone $CO_2$ et l'eau $H_2O$.

## Objet de l'invention

Les caractéristiques essentielles de l'invention sont explicitement définies dans le libellé de la revendication indépendante 1. D'autres caractéristiques de l'invention sont explicitement définies dans les libellés des revendications dépendantes 2-7.

La présente invention concerne donc un procédé de production de distillats moyens à partir d'une charge paraffinique produite par synthèse Fischer-Tropsch comprenant au moins :

a) une étape d'hydrotraitement de ladite charge en présence d'hydrogène et d'un catalyseur d'hydrotraitement à une température comprise entre 100 et 450°C, à une pression comprise entre 0,5 à 15 MPa, l'hydrogène étant introduit dans ladite étape d'hydrotraitement à un débit tel que le rapport volumique hydrogène/charge soit compris entre 50 à 10000 normaux litres par litre, et à une vitesse volumique horaire est comprise entre 0,1 et 10 $h^{-1}$,

b) une étape de séparation d'au moins une partie de l'effluent issu de l'étape a) en au moins une fraction légère, au moins un effluent liquide hydrocarboné et au moins un effluent liquide comprenant l'eau,

c) une étape d'hydroisomérisation/hydrocraquage d'au moins une partie de l'effluent liquide hydrocarboné issu de l'étape b), en présence d'un catalyseur d'hydroisomérisation/hydrocraquage et d'un flux d'hydrogène ayant subi une étape de purification dans le cas où la teneur oxygène atomique dans ledit flux d'hydrogène est supérieur à 500 ppm en volume, les catalyseurs des étapes a) et c) étant définis dans la revendication 1.

Une étape de fractionnement d) de l'effluent issu de l'étape c) peut être incluse pour obtenir au moins une fraction distillat moyen.

Plus précisément l'invention concerne un procédé de production de distillats moyens à partir d'une charge paraffinique produite par synthèse Fischer-Tropsch, dans lequel, à la fois ladite charge paraffinique issue de la synthèse de Fischer-Tropsch et le flux d'hydrogène utilisé dans l'étape d'hydrocraquage/hydroisomérisation comprennent une teneur limitée en molécules contenant au moins un atome d'oxygène.

Un avantage du procédé selon l'invention est de permettre d'augmenter la quantité de distillats moyens disponibles par hydrocraquage des composés paraffiniques les plus lourds, présents dans l'effluent issu de l'unité Fischer-Tropsch, et qui ont des points d'ébullition supérieurs à ceux des coupes kérosène et gazole, par exemple la fraction 370°C$^+$ et ainsi de maximiser le rendement en distillats moyens pour des conditions opératoires données.

## Description détaillée de l'invention

Conformément à l'étape a) du procédé selon l'invention, ladite charge paraffinique subit une étape d'hydrotraitement en présence d'hydrogène et d'un catalyseur d'hydrotraitement à une température comprise entre 100 et 450°C, à une pression comprise entre 0,5 à 15 MPa, l'hydrogène étant introduit dans ladite étape d'hydrotraitement à un débit tel que le rapport volumique hydrogène/hydrocarbures soit compris entre 50 à 10000 normaux litres par litre, et à une vitesse volumique horaire de la charge paraffinique comprise entre 0,1 et 10 $h^{-1}$.

Ladite charge paraffinique produite par synthèse Fischer-Tropsch peut éventuellement subir une étape de fractionnement préalablement à l'étape a) d'hydrotraitement du procédé selon la présente invention.

Conformément à l'invention, ladite charge paraffinique utilisée dans le procédé selon l'invention est produite par synthèse Fischer-Tropsch selon des procédés connus de l'homme du métier.

Dans le procédé Fischer-Tropsch, le gaz de synthèse ($CO+H_2$) est transformé catalytiquement en produits oxygénés et en hydrocarbures essentiellement linéaires sous forme gazeuse, liquide ou solide. Lesdits produits obtenus constituent la charge du procédé selon l'invention. Le gaz de synthèse ($CO+H_2$) est avantageusement produit à partir de gaz naturel, de charbon, de biomasse, de toute source de composés hydrocarbonés ou d'un mélange de ces sources.

De préférence, ladite charge paraffinique produite par synthèse Fischer-Tropsch et utilisée dans le procédé selon l'invention comprend majoritairement des n-paraffines. Ainsi, ladite charge comprend une teneur en n-paraffines supérieure à 60% poids par rapport à la masse totale de ladite charge. Ladite charge peut également comprendre une teneur en produits oxygénés de préférence inférieure à 10% poids, une teneur en insaturés, c'est-à-dire de préférence en produits oléfiniques, de préférence inférieure à 20% en poids et une teneur en iso-paraffines de préférence inférieure à 10% en poids par rapport à la masse totale de ladite charge.

De manière très préférée, ladite charge comprend une teneur en n-paraffines supérieure à 70% poids et de manière encore plus préférée supérieure à 80% poids par rapport à la masse totale de ladite charge.

De préférence, ladite charge paraffinique produite par synthèse Fischer-Tropsch est exempte d'impuretés hétéroatomiques telles que, par exemple, le soufre, l'azote ou des métaux.

De préférence, ladite étape d'hydrotraitement opère à une température comprise entre 150 et 430°C, de manière préférée entre 150 et 380°C, à une pression comprise entre 1 et 10 MPa et de manière préférée entre 1 et 9 MPa, avec un débit d'hydrogène tel que le rapport volumique hydrogène/hydrocarbures soit compris entre 100 et 3000 normaux litres par litre et de manière plus préférée entre 150 et 1500 normaux litres par litre et à une vitesse volumique horaire comprise entre 0,2 et 10 h$^{-1}$ et de manière préférée entre 0,2 et 5 h$^{-1}$.

Lesdits catalyseurs d'hydrotraitement utilisés dans ladite étape b) sont des catalyseurs classiques d'hydrotraitement non craquants ou peu craquants connus de l'homme du métier comprennent du palladium sur de l'alumine. Des catalyseurs d'hydrotraitement préférés sont décrits dans le brevet FR 2 826 972.

Ladite étape a) d'hydrotraitement a pour objectif de réduire la teneur en composés oléfiniques et insaturés ainsi que de décomposer les composés oxygénés, en particulier les alcools et les acides présents dans ladite charge, ainsi que d'éventuellement décomposer d'éventuelles traces de composés soufrés et azotés présentes dans la fraction lourde. Cette étape d'hydrotraitement est non convertissante, c'est à dire les conditions opératoires sont fixées de manière à ce que la conversion de la fraction 370°C$^+$ en fraction 370°C$^-$ est de préférence inférieure à 20% en poids, de manière préférée inférieure à 10% en poids et de manière très préférée inférieure à 5% en poids.

Dans ces conditions et à l'issue de l'étape a) d'hydrotraitement, les teneurs en composés insaturés et oxygénés présents dans ladite charge sont réduites à moins de 0,5% en poids et à environ moins de 0,1% en poids en général.

Conformément à l'étape b) du procédé selon l'invention, au moins une étape de séparation d'au moins une partie et de préférence la totalité de l'effluent issu de l'étape a) est mise œuvre. Ladite étape b) permet de séparer au moins une fraction légère, au moins un effluent liquide hydrocarboné et au moins un effluent liquide comprenant l'eau.

Ladite fraction légère comprend au moins une fraction gazeuse qui comprend l'hydrogène non converti, les impuretés contenant au moins un atome d'oxygène issues de la décomposition des composés oxygénés lors de l'étape a) d'hydrotraitement et éventuellement les composés $C_4^-$, c'est à dire les composés $C_1$ à $C_4$ présentant de préférence un point d'ébullition final inférieur à 20°C.

Ladite étape b) de séparation permet donc également l'élimination de l'effluent dirigé vers l'étape d'hydrocraquage/hydroisomérisation c) des impuretés contenant au moins un atome d'oxygène et de préférence du monoxyde de carbone (CO), du dioxyde de carbone ($CO_2$), et de l'eau ($H_2O$) présent après l'étape d'hydrotraitement.

L'élimination plus ou moins complète d'au moins un effluent liquide comprenant l'eau est avantageusement fonction de la tolérance à l'eau du catalyseur d'hydrocraquage/hydroisomérisation utilisé en aval.

Ladite étape b) de séparation peut avantageusement être réalisée par toutes les méthodes et techniques connues de l'homme du métier. De préférence, ladite étape b) est avantageusement réalisée par distillation, strippage et/ou flash, combiné à un séchage, un passage sur un dessicant, une extraction par solvant, une décantation ou par association d'au moins deux de ces méthodes.

De préférence, ladite étape b) comprend une étape de flash suivie d'une décantation.

La teneur en oxygène atomique dans l'effluent liquide hydrocarboné contenant les hydrocarbures paraffiniques issu de l'étape b) de séparation du procédé selon l'invention, exprimée en partie par million en poids (ppm) est de préférence inférieure à 500 ppm, de manière préférée inférieure à 300 ppm, de manière très préférée inférieure à 100 ppm poids. La teneur en en ppm poids en oxygène atomique dans la charge paraffinique issue de l'étape b) est mesurée par la technique d'absorption infra rouge telle que par exemple la technique décrite dans la demande de brevet US2009/0018374A1.

Conformément à l'étape c) du procédé selon l'invention, au moins une partie et de préférence la totalité de l'effluent liquide hydrocarboné issu de l'étape b), est envoyée dans une étape d'hydroisomérisation/hydrocraquage en présence d'un catalyseur d'hydroisomérisation/hydrocraquage et d'un flux d'hydrogène ayant subi une étape de purification avant d'être introduit dans ladite étape c), dans le cas où la teneur en oxygène atomique dans ledit flux d'hydrogène est supérieure à 500 parties par million en volume.

De préférence, ledit flux d'hydrogène subit une étape de purification dans le cas où la teneur en oxygène atomique dans ledit flux d'hydrogène est supérieur à 250 ppm en volume. De manière préférée, ledit flux d'hydrogène subit une étape de purification dans le cas où la teneur en oxygène atomique dans ledit flux d'hydrogène est supérieur à 50 ppm en volume.

Ledit flux d'hydrogène utilisé dans le procédé selon l'invention et de préférence dans l'étape c) du procédé selon l'invention est avantageusement généré par les procédés connus de l'homme du métier tels que par exemple un procédé de reformage catalytique ou de craquage catalytique des gaz.

Selon la nature des différentes sources, l'hydrogène utilisé dans le procédé selon l'invention peut contenir ou pas des impuretés. La teneur en oxygène atomique dans ledit flux d'hydrogène peut etre mesuré par toute méthode connue de l'homme du métier telle que par exemple par chromatographie en phase gazeuse.

De préférence, ledit flux d'hydrogène peut être de l'hydrogène frais ou un mélange d'hydrogène frais et d'hydrogène de recycle, c'est-à-dire d'hydrogène non converti lors de l'étape c) d'hydroisomérisation/hydrocraquage et recyclé dans ladite étape c). De préférence, l'hydrogène frais ou le mélange d'hydrogène frais et d'hydrogène de recycle peut avantageusement etre purifié dans la même étape de purification.

Dans le cas où ledit flux d'hydrogène contient une teneur en oxygène atomique supérieure à 500 ppm volume, de préférence supérieure à 250 ppm volume et de manière préférée supérieure à 50 ppm volume, ledit flux d'hydrogène subit une étape de purification avant d'être introduit dans ladite étape c).

Ladite étape de purification du flux d'hydrogène peut avantageusement s'effectuer selon toute méthode connue de l'homme du métier.

De préférence, ladite étape de purification est avantageusement mise en œuvre selon les méthodes de d'adsorption modulée en pression ou PSA "Pressure Swing Adsorption" selon la terminologie anglo-saxonne, ou d'adsorption modulée en température ou TSA "Temperature Swing Adsorption" selon la terminologie anglo-saxonne, de lavage aux solvants chimiques ou physiques, de méthanation, d'oxydation préférentielle, de tamis moléculaire (captation sur alumine) de procédés membranaires, utilisées seules ou combinées.

Lorsque le procédé met en œuvre un recyclage de l'hydrogène, une purge de l'hydrogène de recycle peut également avantageusement être effectuée afin de limiter l'accumulation de molécules contenant au moins un atome d'oxygène tel que le monoxyde de carbone CO ou le dioxyde de carbone $CO_2$ et ainsi de limiter la teneur en oxygène atomique dans ledit flux d'hydrogène.

Conformément à l'invention, la teneur en oxygène atomique dans ledit flux d'hydrogène utilisé dans le procédé selon l'invention et de préférence dans l'étape c) du procédé selon l'invention, exprimée en partie par million en volume (ppmv), doit être inférieure à 500 ppmv, de manière préférée inférieure à 250 ppmv et de manière très préférée inférieure à 50 ppmv. La teneur en oxygène atomique dans ledit flux d'hydrogène se calcule à partir des concentrations en molécules ayant au moins un atome d'oxygène dans ledit flux d'hydrogène, pondérées du nombre d'atome d'oxygène présent dans ladite molécule oxygénée. A titre d'exemple, considérant un flux d'hydrogène contenant du CO du $CO_2$, la teneur en oxygène atomique contenue dans ledit flux d'hydrogène est alors égale à :

$$ppmv(O) = ppmv\ (CO) + 2\ *\ ppmv\ (CO_2)$$

avec : ppmv (O) teneur en oxygène atomique dans le flux d'hydrogène en partie par million en volume,

ppmv (CO) teneur en monoxyde de carbone dans le flux d'hydrogène en partie par million en volume,

ppmv ($CO_2$) teneur en dioxyde de carbone dans le flux d'hydrogène en partie par million en volume.

Dans le cas où ledit flux d'hydrogène contient une teneur en oxygène atomique inférieure à 500 ppmv, de préférence inférieure à 250 ppmv et de manière préférée inférieure à 50 ppmv, aucune étape de purification dudit flux d'hydrogène n'est mise en œuvre avant que ledit flux ne soit introduit dans ladite étape c).

Le catalyseur d'hydrocraquage/hydroisomérisation utilisé dans l'étape c) comprends au moins un métal noble du groupe VIII, ledit métal noble étant le platine actif sous sa forme réduite, la teneur en métal noble dudit catalyseur étant comprise entre 0.10 et 2% en poids par rapport au catalyseur fini, et au moins un solide acide de Bronsted constitué par de la silice alumine.

La fonction métallique est avantageusement introduite sur le catalyseur par toute méthode connue de l'homme du métier, comme par exemple le comalaxage, l'imprégnation à sec ou l'imprégnation par échange.

De préférence, le solide acide de Bronsted est constitué par de la silice alumine ou de la zéolithe Y. Éventuellement, un liant peut avantageusement également être utilisé durant l'étape de mise en forme du support. On utilise de préférence un liant lorsque la zéolithe est employée.

Ledit liant est avantageusement choisi parmi la silice ($SiO_2$), l'alumine ($Al_2O_3$), les argiles, l'oxyde de titane ($TiO_2$), l'oxyde de bore ($B_2O_3$) et la zircone ($ZrO_2$) pris seul ou en mélange. De préférence, ledit liant est choisi parmi la silice et l'alumine et de manière encore plus préférée, ledit liant est l'alumine sous toutes ses formes connues de l'homme du métier, telle que par exemple l'alumine gamma.

Un catalyseur d'hydrocraquage/hydroisomérisation préféré du platine et un solide acide de Bronsted de type silice alumine, avantageusement sans aucun liant. La teneur en silice de la silice-alumine, exprimée en pourcentage poids, est généralement comprise entre 1 et 95%, avantageusement entre 5 et 95% et de manière préférée entre 10 et 80% et de manière encore plus préférée entre 20 et 70% et entre 22 et 45%. Cette teneur en silice est parfaitement mesurée à l'aide de la fluorescence X.

Plusieurs catalyseurs préférés utilisés dans l'étape c) d'hydrocraquage/hydroisomérisation du procédé selon l'invention sont décrits ci-après.

Un catalyseur d'hydrocraquage/hydroisomérisation préféré utilisé dans le procédé selon l'invention, comprend une silice-alumine particulière. De préférence, ledit catalyseur comprend, et de préférence est essentiellement constitué de, 0,05 à 10% en poids et de préférence comprise entre 0,1 et 5% poids d'au moins un métal noble du groupe VIII, de préférence choisis parmi le platine et le palladium et de manière préféré, ledit métal noble étant le platine, déposé sur un support silice-alumine, sans aucun liant, contenant une quantité de silice ($SiO_2$) comprise entre 1 et 95%, exprimée en pourcentage poids, de préférence entre 5 et 95%, de manière préférée entre 10 et 80% et de manière très préférée entre 20 et 70% et de manière encore plus préférée entre 22 et 45%, ledit catalyseur présentant :

une surface spécifique BET de 100 à 500 m$^2$/g, de préférence comprise entre 200 m$^2$/g et 450 m$^2$/g et de manière très préférée entre 250 m$^2$/g et 450 m$^2$/g,

- un diamètre moyen des mésopores compris entre 3 et 12 nm, de préférence compris entre 3 nm et 11 nm et de manière très préférée entre 4 nm et 10,5 nm,
- un volume poreux des pores dont le diamètre est compris entre le diamètre moyen tel que défini précédemment diminué de 3 nm et le diamètre moyen tel que défini précédemment augmenté de 3 nm est supérieur à 40% du volume poreux total, de manière préférée compris entre 50% et 90% du volume poreux total et de manière très préférée compris entre 50% et 70% du volume poreux total,
- un volume poreux total compris entre 0,4 et 1,2 ml/g, de préférence entre 0,5 et 1,0 ml/g et de manière très préférée entre 0,5 et 0,9 ml/g,
- un volume des macropores, dont le diamètre est supérieur à 50 nm, et de préférence compris entre 100 nm et 1000 nm, représentant entre 5 et 60% du volume poreux total, de préférence entre 10 et 50% du volume poreux total et de manière encore plus préférée entre 10 et 40% du volume poreux total,
- une teneur en composés alcalins ou alcalino-terreux inférieure à 300 ppm poids et de préférence inférieure à 200 ppm poids.

Le diamètre moyen des mésopores est défini comme étant le diamètre correspondant à l'annulation de la courbe dérivée du volume d'intrusion du mercure obtenue à partir de la courbe de porosité au mercure pour des diamètres de pores compris entre 2 et 50 m. Le diamètre moyen des mésopores du catalyseur est avantageusement mesuré à partir du profil de répartition poreuse obtenu à l'aide d'un porosimètre au mercure.

De préférence, la dispersion du métal dudit catalyseur préféré est avantageusement comprise entre 20% et 100%, de manière préférée entre 30% et 100% et de manière très préférée entre 40 et 100%. La dispersion, représentant la fraction de métal accessible au réactif par rapport à la quantité totale de métal du catalyseur, est avantageusement mesurée, par exemple, par titrage $H_2/O_2$ ou par microscopie électronique à transmission.

De préférence, le coefficient de répartition du métal noble dudit catalyseur préféré est supérieur à 0,1, de préférence supérieur à 0,2 et de manière très préférée supérieur à 0,4. La répartition du métal noble représente la distribution du métal à l'intérieur du grain de catalyseur, le métal pouvant être bien ou mal dispersé. Ainsi, il est possible d'obtenir le platine mal réparti (par exemple détecté dans une couronne dont l'épaisseur est nettement inférieure au rayon du grain) mais bien dispersé c'est-à-dire que tous les atomes de platine, situés en couronne, seront accessibles aux réactifs. Le coefficient de répartition du métal noble peut être mesuré par microsonde de Castaing.

Le sel de métal noble est avantageusement introduit par une des méthodes usuelles utilisées pour déposer le métal à la surface d'un solide. Une des méthodes préférées est l'imprégnation à sec qui consiste en l'introduction du sel de métal dans un volume de solution qui est égal au volume poreux de la masse de solide à imprégner. Avant l'opération de réduction, le catalyseur peut avantageusement subir une calcination comme par exemple un traitement sous air sec à une température de 300 à 750°C et de préférence à une température égale à 520°C, pendant 0,25 à 10 heures et de préférence pendant 2 heures. Un autre catalyseur d'hydrocraquage/hydroisomérisation préféré utilisé dans le procédé selon l'invention peut comprendre aditionellement au moins un élément hydro-déshydrogénant choisi dans le groupe formé par les éléments du groupe VIB et du groupe VIII de la classification périodique, de 0,01 à 5,5% poids d'oxyde d'un élément dopant choisi parmi le phosphore, le bore et le silicium et un support non zéolitique à base de silice

- alumine contenant une quantité supérieure à 5% poids et inférieure ou égale à 95% poids de silice (SiO$_2$), ledit catalyseur présentant les caractéristiques suivantes :
- un diamètre moyen mésoporeux, mesuré par porosimétrie au mercure, compris entre 2 et 14 nm,
- un volume poreux total, mesuré par porosimétrie au mercure, compris entre 0,1 ml/g et 0,5 ml/g,
- un volume poreux total, mesuré par porosimétrie azote, compris entre 0,1 ml/g et 0,5 ml/g,
- une surface spécifique BET comprise entre 100 et 550 m$^2$/g ,
- un volume poreux, mesuré par porosimétrie au mercure, compris dans les pores de diamètre supérieur à 14 nm inférieur à 0,1 ml/g,
- un volume poreux, mesuré par porosimétrie au mercure, compris dans les pores de diamètre supérieur à 16 nm inférieur à 0,1 ml/g,
- un volume poreux, mesuré par porosimétrie au mercure, compris dans les pores de diamètre supérieurs à 20 nm, inférieur à 0,1 ml/g,
- un volume poreux, mesuré par porosimétrie au mercure, compris dans les pores de diamètre supérieurs à 50 nm inférieur à 0,1 ml/g.
- un diagramme de diffraction X qui contient au moins les raies principales caractéristiques d'au moins une des alumines de transition comprise dans le groupe composé par les alumines alpha, rhô, chi, eta, gamma, kappa, thêta et delta,

- une densité de remplissage tassée supérieure à 0,7 g/ml.

Un autre catalyseur d'hydrocraquage/hydroisomérisation préféré utilisé dans le procédé selon l'invention comprend (et de préférence est essentiellement constitué 0.10 et 2% en poids de platine, déposé sur un support silice-alumine, sans aucun liant, contenant une quantité de silice ($SiO_2$) comprise entre 1 et 95%, exprimée en pourcentage poids, de préférence entre 5 et 95%, de manière préférée entre 10 et 80% et de manière très préférée entre 20 et 70% et de manière encore plus préférée entre 22 et 45%, ledit catalyseur présentant :

- une surface spécifique BET de 150 à 600 $m^2/g$ et de préférence comprise entre 200 $m^2/g$ et 600 $m^2/g$,
- un diamètre moyen des mésopores compris entre 3 et 12 nm, de préférence compris entre 3 nm et 11 nm et de manière très préférée entre 4 nm et 10,5 nm,
- un volume poreux des pores dont le diamètre est compris entre le diamètre moyen tel que défini précédemment diminué de 3 nm et le diamètre moyen tel que défini précédemment augmenté de 3 nm est supérieur à 60% du volume poreux total, de manière préférée supérieur à 70% du volume poreux total et de manière très préférée supérieur à 80% du volume poreux total,
- un volume poreux total inférieur à 1 ml/g, de préférence compris entre 0,1 et 0,9 ml/g et de manière très préférée entre 0,2 et 0,8 ml/g,
- une teneur en composés alcalins ou alcalino-terreux inférieure à 300 ppm poids et de préférence inférieure à 200 ppm poids.

De préférence, la dispersion dudit catalyseur préféré utilisé dans l'étape d) du procédé selon l'invention est avantageusement comprise entre 20% et 100%, de manière préférée entre 30% et 100% et de manière très préférée entre 40 et 100.

De préférence, le coefficient de répartition du métal noble dudit catalyseur préféré utilisé dans l'étape d) du procédé selon l'invention est supérieur à 0,1, de préférence supérieur à 0,2 et de manière très préférée supérieur à 0,4. Ce coefficient de répartition est mesuré par microsonde de Castaing.

Ladite étape c) d'hydroisomérisation/hydrocraquage opère à une température comprise entre 200 et 450°C et préférentiellement entre 250°C et 450°C, de manière préférée entre 300 et 450°C, et de manière préférée entre 320 et 420°C, à une pression comprise entre 0,2 et 15 MPa, de préférence entre 0,5 et 10 MPa et de manière préférée entre 1 à 9 MPa, à une vitesse spatiale est comprise entre 0,1 $h^{-1}$ et 10 $h^{-1}$ et de préférence entre 0,2 et 7 $h^{-1}$ est avantageusement entre 0,5 et 5,0 $h^{-1}$ et à un taux d'hydrogène est compris entre 100 et 2000 normaux litres d'hydrogène par litre de charge et par heure et préférentiellement entre 150 et 1500 normaux litres d'hydrogène par litre de charge.

L'étape c) d'hydroisomérisation et d'hydrocraquage du procédé selon l'invention est avantageusement conduite dans des conditions telles que la conversion par passe en produits à points d'ébullition supérieurs ou égaux à 370°C en des produits ayant des points d'ébullition inférieurs à 370°C est supérieure à 40% poids, et de façon encore plus préférée d'au moins 40% de préférence supérieure à 50%, de manière à obtenir des distillats moyens (kérosène et gazole).

Conformément à l'étape d) du procédé selon l'invention, l'effluent hydrocraqué / hydroisomérisé issu de l'étape c) peut subir une étape de fractionnement, de préférence dans un train de distillation qui intègre une distillation atmosphérique et éventuellement une distillation sous vide. Ladite étape d) a pour but de séparer les produits de conversion de point d'ébullition inférieur à 300°C, de préférence inférieur à 340°C et de manière encore plus préférée inférieur à 370°C et incluant notamment ceux formés lors de l'étape (c) dans le réacteur d'hydroisomérisation / hydrocraquage, et de séparer la fraction résiduelle dont le point initial d'ébullition est généralement supérieur à au moins 340°C et de préférence supérieur ou égal à au moins 370°C. Parmi les produits de conversion et hydroisomérisés, il est séparé outre les gaz légers $C_1$-$C_4$ au moins une fraction essence (ou naphta) et au moins une fraction distillat moyen kérosène et gazole. De préférence, la fraction résiduelle, dont le point initial d'ébullition est généralement supérieur à au moins 300°C, de préférence supérieur ou égal à 340°C et de préférence supérieur ou égal à au moins 370°C est recyclée dans l'étape c) d'hydroisomérisation et d'hydrocraquage du procédé selon l'invention. Selon un autre mode de réalisation de l'étape d) du procédé selon l'invention, ladite fraction résiduelle peut fournir d'excellentes bases pour les huiles.

Il peut être également avantageux de recycler au moins en partie et de préférence en totalité, dans l'étape (c) l'une au moins des coupes kérosène et gazole ainsi obtenus. Les coupes gazoles et kérosènes sont de préférence récupérées séparément ou mélangées, mais les points de coupe sont ajustés par l'exploitant en fonction de ses besoins. On a pu constater qu'il est avantageux de recycler une partie du kérosène pour améliorer ses propriétés à froid.

## EXEMPLES

### Exemple 1: Préparation du catalyseur d'hydrotraitement (C1)

Le catalyseur est un catalyseur industriel à base de métal noble de type palladium sur alumine avec une teneur en palladium de 0,3% poids par rapport au poids total du catalyseur fini, fourni par la société AXENS.

### Exemple 2: Préparation d'un catalyseur d'hydroisomérisation et d'hydrocraquage conforme à l'invention (C2)

La poudre de silice-alumine est préparée selon le protocole de synthèse décrit dans le brevet FR 2 639 256 (exemple 3). Les quantités d'acide orthosilicique et d'alcoolate d'aluminium sont choisies de manière à avoir une composition de 70% pds $Al_2O_3$ et 30% pds $SiO_2$ dans le solide final.

La poudre séchée est mise au contact d'une solution aqueuse d'acide nitrique, la quantité en acide nitrique étant de 5% en poids par rapport à la quantité de poudre et la quantité de solution aqueuse telle que la perte au feu à 550°C du gâteau obtenu soit d'environ 60% en poids. Ce gâteau est malaxé puis extrudé. Le malaxage se fait sur un malaxeur bras en Z. L'extrusion est réalisée par passage de la pâte au travers d'une filière munie d'orifices de diamètre 1,4 mm. Les extrudés ainsi obtenus sont séchés en étuve à 110°C puis calciné sous débit d'air sec (rampe de montée de 5°C/min). La température de calcination est ajustée de manière à obtenir une surface spécifique de 310 $m^2$/g.

Les extrudés de silice-alumine sont ensuite soumis à une étape d'imprégnation à sec par une solution aqueuse d'acide hexachloroplatinique $H_2PtCl_6$, laissés à maturer en maturateur à eau durant 24 heures à température ambiante puis calcinés durant deux heures sous air sec en lit traversé à 500°C (rampe de montée en température de 5°C/min). La teneur pondérale en platine du catalyseur fini après calcination est de 0,70%.

Les caractéristiques du catalyseur ainsi préparé sont les suivantes :

- un diamètre moyen des mésopores de 6.5 nm,
- un volume poreux des pores dont le diamètre est compris entre le diamètre moyen tel que défini précédemment diminué de 3 nm et le diamètre moyen tel que défini précédemment augmenté de 3 nm égal à 60% du volume poreux total,
- un volume poreux total de 0,70 ml/g,
- un volume des macropores, dont le diamètre est supérieur à 50 nm représente 29% du volume poreux total
- une surface BET de 310 $m^2$/g,
- une teneur en sodium de 110 +- 13 ppm en poids,
- une dispersion du métal noble de 85%,
- un coefficient de répartition du métal noble égal à 0,92.

### Exemple 3 : traitement d'une charge issue du Fischer-Tropsch conformément au procédé selon l'invention

Une charge issue de la synthèse Fischer-Tropsch sur un catalyseur au cobalt est séparée en deux fractions par distillation, la fraction la plus lourde présentant les caractéristiques fournies dans le tableau 1.

Tableau 1: caractéristiques de la fraction lourde

| | |
|---|---|
| Distillation Simulée | T (5% poids): 175°C<br>T (25% poids): 246°C<br>T (50% poids): 346°C<br>T (75% poids): 444°C<br>T (95% poids): 570°C |
| composés 370°C$^+$ (par GC) | 43% poids |
| densité à 15°C | 0,797 |
| teneur en azote | 7 ppm |
| teneur en soufre | < limite détection |
| teneur totale en oxygène atomique (par IR) | 3000 ppm |
| analyse détaillée de la fraction $C_{30}^-$ (GC)<br>n-paraffines<br>i-paraffines | <br>82% poids<br>6% poids |

(suite)

| analyse détaillée de la fraction $C_{30}^-$ (GC) | |
|---|---|
| oléfines | 11% poids |
| oxygénés | 1% poids |

La teneur totale en oxygène atomique dans ladite fraction est mesurée par la technique d'absorption infra rouge décrite dans la demande de brevet US2009/0018374A1.

La teneur en oxygénés représente la teneur en molécules comprenant au moins un atome d'oxygène présente dans la fraction lourde et est exprimée en pourcentage poids par rapport à la passe totale de ladite fraction. La teneur en oxygénés est mesuré par chromatographie en phase gazeuse.

Cette fraction lourde est traitée en lit traversé à hydrogène perdu, c'est-à-dire sans recycle de l'hydrogène, sur le catalyseur d'hydrotraitement C1 dans des conditions opératoires qui permettent l'élimination des composés oléfiniques et oxygénés ainsi que des traces d'azote.

Les conditions opératoires sélectionnées sont les suivantes:

- vitesse volumique horaire WH (volume de charge / volume de catalyseur / heure) = 2 $h^{-1}$
- pression totale de travail: 5 MPa
- rapport hydrogène / charge: 200 normaux litres /litre
- température: 270°C

L'effluent hydrotraité subit ensuite une étape de séparation par flash et décantation. A l'issue de ladite séparation, le monoxyde de carbone et/ou dioxyde de carbone et/ou l'eau et/ou l'ammoniac formés lors de l'hydrotraitement par décomposition des composés oxygénés sont éliminés.

Les teneurs en oléfines et composés azotés de l'effluent hydrotraité et ayant subi ladite étape de séparation tombent en dessous des seuils de détection et la teneur en oxygène mesurée par IR est inférieure à 50 ppm en poids, alors que la conversion de la fraction 370°C$^+$ en fraction 370°C$^-$ est négligeable (inférieure à 5% poids). Les caractéristiques de la fraction lourde après hydrotraitement et séparation sont indiquées dans le tableau 2.

Tableau 2: caractéristiques de la fraction lourde après hydrotraitement et séparation.

| Distillation Simulée | T (5% poids): 172°C |
|---|---|
| | T (25% poids): 242°C |
| | T (50% poids): 343°C |
| | T (75% poids): 441°C |
| | T (95% poids): 568°C |
| composés 370°C$^+$ (par GC) | 41% poids |
| densité à 15°C | 0,797 |
| teneur en azote | < limite détection |
| teneur en soufre | < limite détection |
| teneur en oxygène (par IR) | < 50 ppm |
| analyse détaillée de la fraction $C_{30}^-$ (GC) | |
| n-paraffines | 91% poids |
| i-paraffines | 9% poids |
| oléfines | < limite détection |
| oxygénés | < limite détection |

L'effluent hydrotraité et ayant subi l'étape de flash et de décantation constitue la charge d'hydrocraquage envoyée sur le catalyseur d'hydroisomérisation et d'hydrocraquage C2 conforme à l'invention.

Avant test, le catalyseur C2 subit une étape de réduction dans les conditions opératoires suivantes :

- débit d'hydrogène pur: 1600 normaux litres par heure et par litre de catalyseur,
- montée de la température ambiante à 120°C : 10°C/min,
- palier d'une heure à 120°C,

- montée de 120°C à 450°C à 5°C/min,
- palier de deux heures à 450°C,
- pression : 0,1 MPa

Après réduction, le test catalytique s'effectue dans les conditions suivantes :

- pression totale de 5 MPa,
- rapport hydrogène sur charge de 800 normaux litres/litre,
- vitesse volumique horaire (WH) égale à 2 $h^{-1}$.

Le flux d'hydrogène envoyé dans l'étape d'hydroisomérisation/hydrocraquage est un flux d'hydrogène d'Air Liquide de qualité U, c'est-à-dire comprenant des teneurs en $O_2$ < 10 ppmv, et $H_2O$ < 40 ppmv. La teneur en oxygène atomique dans ledit flux d'hydrogène est donc inférieure à 60 ppmv.

La conversion de la fraction 370°C$^+$ est prise égale à :

$$C(370°C^+) = [ (\% \text{ de } 370°C^-_{\text{effluents}}) - (\% \text{ de } 370°C^-_{\text{charge}}) ] / [ 100 - (\% \text{ de } 370°C^-_{\text{charge}})]$$

avec

% de 370°C$^-$ $_{\text{effluents}}$ = pourcentage massique en composés ayant des points d'ébullition inférieurs à 370°C dans les effluents,
et
% de 370°C$^-$ $_{\text{charge}}$ = pourcentage massique en composés ayant des points d'ébullition inférieurs à 370°C dans la charge d'hydrocraquage.

La température de réaction est ajustée à 347°C de manière à obtenir un niveau de conversion de la fraction 370°C$^+$ égal à 70% en poids. Les analyses par chromatographie en phase gazeuse permettent d'obtenir la distribution des différentes coupes dans l'effluent hydrocraqué (tableau 4):

- coupe $C_1$-$C_4$: hydrocarbures de 1 à 4 atomes de carbone inclus
- coupe $C_5$-$C_9$: hydrocarbures de 5 à 9 atomes de carbone inclus (coupe naphta)
- coupe $C_{10}$-$C_{14}$: hydrocarbures de 10 à 14 atomes de carbone inclus (coupe kérosène)
- coupe $C_{15}$-$C_{22}$: hydrocarbures de 15 à 22 atomes de carbone inclus (coupe gazole)
- coupe $C_{22+}$: hydrocarbures à plus de 22 atomes de carbone (coupe 370°C$^+$).

Tableau 4 : répartition par coupes de l'effluent hydrocraqué (analyse GC).

|  | % poids |
|---|---|
| coupe $C_1$-$C_4$ | 2,3 |
| coupe $C_5$-$C_9$ | 11,6 |
| coupe $C_{10}$-$C_{14}$ | 31,8 |
| coupe $C_{15}$-$C_{22}$ | 41,7 |
| coupe $C_{22}^+$ | 12,6 |

**Exemple 4 : traitement d'une charge issue du Fischer-Tropsch non conformément au procédé selon l'invention**

On effectue l'étape d'hydrocraquage sur le catalyseur C2 dans les mêmes conditions que dans l'exemple 3, hormis que le flux d'hydrogène utilisé est issu d'un mélange étalon d'Air Liquide contenant à présent 800 ppmv de CO, soit 800 ppmv d'oxygène, ledit flux d'hydrogène ne subissant aucune étape de purification.

**Exemple 5 : traitement d'une charge issue du Fischer-Tropsch non conformément au procédé selon l'invention**

On effectue l'étape d'hydrocraquage sur le catalyseur C2 dans les mêmes conditions que dans l'exemple 3, hormis que l'hydrogène utilisé est issu d'un mélange étalon d'Air Liquide contenant à présent 700 ppmv de $CO_2$, soit 1400 ppmv d'oxygène, ledit flux d'hydrogène ne subissant aucune étape de purification.

Le tableau 5 reporte la répartition par coupe de l'effluent hydrocraqué en fonction de la teneur en oxygène dans l'hydrogène des exemples 4 et 5 non conformes au procédé selon l'invention.

Tableau 5 : répartition par coupes de l'effluent hydrocraqué (analyse GC) en fonction de la teneur en oxygène dans l'hydrogène.

| teneur en oxygène atomique dans l'hydrogène en ppmv | 700 | 1400 |
|---|---|---|
| coupe $C_1$-$C_4$ % poids | 2,0 | 1,8 |
| coupe $C_5$-$C_9$ % poids | 10,2 | 9,2 |
| coupe $C_{10}$-$C_{14}$ % poids | 30,6 | 30,0 |
| coupe $C_{15}$-$C_{22}$ % poids | 40,8 | 40,5 |
| coupe $C_{22}^+$ % poids | 16,4 | 18,5 |

La comparaison des résultats des tableaux 4 et 5 montre que la présence d'oxygène dans l'hydrogène a un impact négatif sur les performances du catalyseur d'hydrocraquage et d'isomérisation. Ainsi le pourcentage en distillats moyens (coupe $C_{10}$-$C_{22}$) présent dans l'effluent hydrocraqué est diminué en présence d'oxygène dans l'hydrogène puisque ce pourcentage passe de 73,5% pour une teneur en oxygène atomique inférieure à 50 ppmv à 71,4% pour une teneur égale à 700 ppmv et à 70,5% pour une teneur égale à 1400 ppmv.

**Revendications**

1. Procédé de production de distillats moyens à partir d'une charge paraffinique produite par synthèse Fischer-Tropsch comprenant une teneur en n-paraffines supérieure à 70% poids par rapport à la masse totale de ladite charge, une teneur en produits oxygénés inférieure à 10% poids, une teneur en insaturés inférieure à 20% en poids et une teneur en iso-paraffines inférieure à 10% poids par rapport à la masse totale de ladite charge, comprenant au moins :

   a) une étape d'hydrotraitement de ladite charge en présence d'hydrogène et d'un catalyseur d'hydrotraitement à une température comprise entre 100 et 450°C, à une pression comprise entre 0,5 à 15 MPa, l'hydrogène étant introduit dans ladite étape d'hydrotraitement à un débit tel que le rapport volumique hydrogène/charge soit compris entre 50 à 10000 normaux litres par litre, et à une vitesse volumique horaire est comprise entre 0,1 et 10 $h^{-1}$, le catalyseur d'hydrotraitement comprenant du palladium sur de l'alumine,
   b) une étape de séparation d'au moins une partie de l'effluent issu de l'étape a) en au moins une fraction légère, au moins un effluent liquide hydrocarboné et au moins un effluent liquide comprenant l'eau,
   c) une étape d'hydroisomérisation/hydrocraquage d'au moins une partie de l'effluent liquide hydrocarboné issu de l'étape b), à une température comprise entre 200 et 450°C, à une pression comprise entre 0.2 et 15 MPa, à une vitesse spatiale comprise entre 0.1 $h^{-1}$ et 10 $h^{-1}$ et à un taux d'hydrogène compris entre 100 et 2000 normaux litres d'hydrogène par litre de charge et par heure, en présence d'un catalyseur d'hydroisomérisation/hydrocraquage et d'un flux d'hydrogène comprenant une teneur en oxygène atomique exprimée en partie par million en volume (ppmv), inférieure à 500 ppmv, d) une étape de fractionnement de l'effluent issu de l'étape c) pour obtenir au moins une fraction distillat moyen, le catalyseur d'hydromérisation/hydrocraquage comprenant au moins un métal noble du groupe VIII ledit métal noble étant le platine actif sous sa forme réduite, la teneur en métal noble dudit catalyseur étant comprise entre 0,10 et 2% en poids par rapport au catalyseur fini, et au moins un solide acide de Bronsted constitué par de la silice alumine,

   dans lequel ledit flux d'hydrogène de l'étape c) subit une étape de purification avant d'être introduit dans ladite étape c), pour limiter la teneur en molécules contenant au moins un atome d'oxygène dans ledit flux, dans le cas où ledit flux contient une teneur en oxygène atomique supérieure à 500 ppm en volume.

2. Procédé selon la revendication 1 dans lequel ladite charge paraffinique produite par synthèse Fischer-Tropsch comprend une teneur en n-paraffines supérieure à 60% poids par rapport à la masse totale de ladite charge, une teneur en produits oxygénés inférieure à 10% poids, une teneur en insaturés inférieure à 20% en poids et une teneur en iso-paraffines inférieure à 10% poids par rapport à la masse totale de ladite charge.

3. Procédé selon l'une des revendications 1 ou 2 dans lequel l'étape a) d'hydrotraitement opère à une température comprise entre 150 et 430°C, à une pression comprise entre 1 et 10 MPa avec un débit d'hydrogène tel que le rapport volumique hydrogène sur charge soit compris entre 100 et 3000 normaux litres par litre et à une vitesse volumique horaire est 0,2 et 10 h$^{-1}$.

4. Procédé selon l'une des revendications 1 à 3 dans lequel ladite étape b) de séparation est une étape de flash suivie d'une décantation.

5. Procédé selon l'une des revendications 1 à 4 dans lequel ledit flux d'hydrogène subit une étape de purification dans le cas où la teneur en oxygène atomique dans ledit flux d'hydrogène est supérieure à 250 ppm en volume.

6. Procédé selon l'une des revendications 1 à 5 dans lequel ledit flux d'hydrogène subit une étape de purification dans le cas où la teneur en oxygène atomique dans ledit flux d'hydrogène est supérieure à 50 ppm en volume.

7. Procédé selon l'une des revendications 1 à 6 dans lequel ladite étape de purification est mise en œuvre selon les méthodes de d'adsorption modulée en pression ou PSA "Pressure Swing Adsorption" selon la terminologie anglo-saxonne, ou d'adsorption modulée en température ou TSA "Temperature Swing Adsorption" selon la terminologie anglo-saxonne, de lavage aux amines, de méthanation, d'oxydation préférentielle, de procédés membranaires, utilisées seules ou combinées.

## Patentansprüche

1. Verfahren zur Herstellung von Mitteldestillaten aus einer Paraffincharge, die mittels Fischer-Tropsch-Synthese erzeugt wurde und einen Gehalt an n-Paraffinen von mehr als 70 Gewichts-% unter Bezugnahme auf die Gesamtmasse der Charge, einen Gehalt an sauerstoffhaltigen Stoffen von weniger als 10 Gewicht-%, einen Gehalt an ungesättigten Verbindungen von weniger als 20 Gewichts-% und einen Gehalt an Isoparaffinen von weniger als 10 Gewichts-% unter Bezugnahme auf die Gesamtmasse der Charge umfasst, wobei es zumindest Folgendes umfasst:

a) einen Schritt der Hydrobehandlung der Charge in Gegenwart von Wasserstoff und eines Hydrobehandlungskatalysators bei einer Temperatur im Bereich von 100 bis 450 °C, bei einem Druck im Bereich von 0,5 bis 15 MPa, wobei der Wasserstoff mit einer Flussrate, die derart beschaffen ist, dass das Wasserstoff/Chargen-Volumenverhältnis im Bereich von 50 bis 1000 Normlitern pro Liter liegt, und mit einer stundenbezogenen Raumgeschwindigkeit im Bereich von 0,1 bis 10 h$^{-1}$ in den Hydrobehandlungsschritt eingeleitet wird, wobei der Hydrobehandlungskatalysator Palladium auf Aluminiumoxid umfasst,
b) einen Schritt des Auftrennens mindestens einer Teilmenge des Stoffstroms, welcher aus dem Schritt a) stammt, in mindestens eine Leichtfraktion, mindestens einen kohlenwasserstoffartigen flüssigen Stoffstrom und mindestens einen flüssigen Stoffstrom, der Wasser umfasst,
c) einen Schritt des Hydroisomerisierens/Hydrocrackens zumindest einer Teilmenge des kohlenwasserstoffartigen flüssigen Stoffstroms, der aus dem Schritt b) stammt, bei einer Temperatur im Bereich von 200 bis 450 °C, bei einem Druck im Bereich von 0,2 bis 15 MPa, bei einer Raumgeschwindigkeit im Bereich von 0,1 h$^{-1}$ bis 10 h$^{-1}$ und bei einem Wasserstoffanteil im Bereich von 100 bis 2000 Normlitern an Wasserstoff pro Liter an Charge und pro Stunde, in Gegenwart eines Hydroisomerisierungs/Hydrocrack-Katalysators und eines Wasserstoffstroms, der einen Gehalt an atomarem Sauerstoff, ausgedrückt in Teilen auf eine Million nach Volumen (ppmv), von weniger als 500 ppmv umfasst,
d) einen Schritt des Fraktionierens des Stoffstroms, welcher aus dem Schritt c) stammt, um mindestens eine Mitteldestillatfraktion zu erhalten, wobei der Hydroisomerisierungs/Hydrocrack-Katalysator mindestens ein Edelmetall der Gruppe VIII umfasst, wobei es sich bei dem Edelmetall um aktives Platin in seiner reduzierten Form handelt, wobei der Gehalt des Katalysators an Edelmetall im Bereich von 0,10 bis 2 Gewichts-% unter Bezugnahme auf den gebrauchsfertigen Katalysator liegt, sowie mindestens eine feststoffliche Brönsted-Säure umfasst, bei welcher es sich es sich um Siliciumdioxid/Aluminiumoxid handelt,

wobei der Wasserstoffstrom des Schrittes c) einem Aufreinigungsschritt unterzogen wird, bevor er dem Schritt c) zugeführt wird, um in diesem Stoffstrom den Gehalt an Molekülen zu begrenzen, welche mindestens ein Sauerstoffatom enthalten, sofern der Stoffstrom einen Gehalt an atomarem Sauerstoff von mehr als 500 ppm nach Volumen enthält.

**2.** Verfahren nach Anspruch 1, wobei die Paraffincharge, welche mittels Fischer-Tropsch-Synthese erzeugt wurde, einen Gehalt an n-Paraffinen von mehr als 60 Gewichts-% unter Bezugnahme auf die Gesamtmasse der Charge, einen Gehalt an sauerstoffhaltigen Stoffen von weniger als 10 Gewicht-%, einen Gehalt an ungesättigten Verbindungen von weniger als 20 Gewichts-% und einen Gehalt an Isoparaffinen von weniger als 10 Gewichts-% unter Bezugnahme auf die Gesamtmasse der Charge umfasst.

**3.** Verfahren nach einem der Ansprüche 1 oder 2, wobei der Schritt a) des Hydrobehandeln bei einer Temperatur im Bereich von 150 bis 430 °C, bei einem Druck im Bereich von 1 bis 10 MPa mit einer Wasserstoff-Flussrate, die derart beschaffen ist, dass das Volumenverhältnis von Wasserstoff zu Charge im Bereich von 100 bis 3000 Normlitern pro Liter liegt, und mit einer stundenbezogenen Raumgeschwindigkeit betrieben wird, welche 0,2 und 10 h$^{-1}$ beträgt.

**4.** Verfahren nach einem der Ansprüche 1 bis 3, wobei es sich bei dem Schritt b) des Auftrennens um einen Entspannungsschritt handelt, auf welchen ein Absetzvorgang folgt.

**5.** Verfahren nach einem der Ansprüche 1 bis 4, wobei der Wasserstoff-Stoffstrom einem Aufreinigungsschritt unterzogen wird, sofern der Gehalt an atomarem Sauerstoff in dem Wasserstoff-Stoffstrom mehr als 250 ppm nach Volumen beträgt.

**6.** Verfahren nach einem der Ansprüche 1 bis 5, wobei der Wasserstoff-Stoffstrom einem Aufreinigungsschritt unterzogen wird, sofern der Gehalt an atomarem Sauerstoff in dem Wasserstoff-Stoffstrom mehr als 50 ppm nach Volumen beträgt.

**7.** Verfahren nach einem der Ansprüche 1 bis 6, wobei der Aufreinigungsschritt gemäß den Methoden der Druckwechseladsorption, oder PSA "Pressure Swing Adsorption" in der englischsprachigen Bezeichnung, oder der Temperaturwechseladsorption, oder TSA "Temperature Swing Adsorption" in der englischsprachigen Bezeichnung, des Waschens mit Aminen, der Methanisierung, der bevorzugten Oxidation, der membrangestützten Vorgänge umgesetzt wird, wobei diese einzeln oder kombiniert zur Anwendung kommen können.

**Claims**

**1.** Process for producing middle distillates from a paraffinic feedstock produced by Fischer-Tropsch synthesis comprising a content of n-paraffins of greater than 70% by weight relative to the total mass of said feedstock, a content of oxygen-comprising products of less than 10% by weight, a content of unsaturated substances of less than 20% by weight and a content of isoparaffins of less than 10% by weight, relative to the total mass of said feedstock, comprising at least:

a) a step of hydrotreatment of said feedstock in the presence of hydrogen and a hydrotreatment catalyst at a temperature of between 100 and 450°C, at a pressure of between 0.5 and 15 MPa, the hydrogen being introduced into said hydrotreatment step at a flow rate such that the hydrogen/feedstock ratio by volume is between 50 and 10 000 normal litres per litre, and at a hourly space velocity of between 0.1 and 10 h$^{-1}$, the hydrotreatment catalyst comprising palladium on alumina,
b) a step of separation of at least a portion of the effluent resulting from step a) into at least one light fraction, at least one liquid hydrocarbon effluent and at least one liquid effluent comprising water,
c) a step of hydroisomerization/hydrocracking of at least a portion of the liquid hydrocarbon effluent resulting from step b), at a temperature of between 200 and 450°C, at a pressure of between 0.2 and 15 MPa, at a space velocity of between 0.1 h$^{-1}$ and 10 h$^{-1}$ and at a hydrogen content of between 100 and 2000 normal litres of hydrogen per litre of feedstock and per hour, in the presence of a hydroisomerization/hydrocracking catalyst and a stream of hydrogen comprising a content of atomic oxygen, expressed in parts per million by volume (ppmv), of less than 500 ppmv,
d) a step of fractionation of the effluent resulting from step c) to obtain at least one middle distillate fraction, the hydroisomerization/hydrocracking catalyst comprising at least one noble metal from group VIII, said noble metal being platinum active in its reduced form, the content of noble metal in said catalyst being between 0.10 and 2% by weight relative to the finished catalyst, and at least one solid Brønsted acid consisting of silica-alumina,

wherein said stream of hydrogen of step c) undergoes a step of purification before being introduced into said step c) in order to limit the content of molecules containing at least one oxygen atom in said stream, in the case where said stream contains a content of atomic oxygen of greater than 500 ppm by volume.

2.  Process according to Claim 1, wherein said paraffinic feedstock produced by Fischer-Tropsch synthesis comprises a content of n-paraffins of greater than 60% by weight relative to the total mass of said feedstock, a content of oxygen-comprising products of less than 10% by weight, a content of unsaturated substances of less than 20% by weight and a content of isoparaffins of less than 10% by weight, relative to the total mass of said feedstock.

3.  Process according to either of Claims 1 and 2, wherein the hydrotreatment step a) is performed at a temperature of between 150 and 430°C, at a pressure of between 1 and 10 MPa, with a hydrogen flow rate such that the hydrogen-to-feedstock ratio by volume is between 100 and 3000 normal litres per litre, and at an hourly space velocity is 0.2 and 10 $h^{-1}$.

4.  Process according to any of Claims 1 to 3, wherein said separation step b) is a step of flashing followed by decantation.

5.  Process according to any of Claims 1 to 4, wherein said hydrogen stream undergoes a purification step in the case where the content of atomic oxygen in said hydrogen stream is greater than 250 ppm by volume.

6.  Process according to any of Claims 1 to 5, wherein said hydrogen stream undergoes a purification step in the case where the content of atomic oxygen in said hydrogen stream is greater than 50 ppm by volume.

7.  Process according to any of Claims 1 to 6, wherein said purification step is carried out according to the methods of pressure swing adsorption, PSA, or temperature swing adsorption, TSA, amine scrubbing, methanation, preferential oxidation, or membrane processes, used alone or in combination.

**EP 2 586 851 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0583836 B2
- US 6709569 B2
- FR 2826972
- US 20090018374 A1
- FR 2639256

**Littérature non-brevet citée dans la description**

- **D. LECKEL.** *Energy & Fuels,* 2005, vol. 19, 1795-1803